# EUROPEAN PATENT APPLICATION

(11) **EP 3 456 592 A1**
(43) Date of publication of application: **20.03.2019**
(21) Application number: 17191287.6
(22) Date of filing: 15.09.2017
(51) Int. Cl.: B60R 25/20

(54) **AUTOMOBILE-PERSON INTERACTION**

(71) Applicant: NXP B.V., 5656 AG Eindhoven (NL)
(72) Inventor: Schell, Joanne, 5656 AG Eindhoven (NL); Schwann, Paul, 5656 AG Eindhoven (NL)
(74) Representative: Hardingham, Christopher Mark

(57) **Abstract**

It is described a method for automobile-person interaction, comprising: authenticating a portable electronic key (5) by communication with an automobile wireless communication device (9); triggering the capturing of image data using a camera system (11a, ..., 11e) of the automobile; analyzing the image data; and performing an action depending on the analyzed image data.

## Description

### FIELD OF THE INVENTION

The present invention relates to a method for automobile-person interaction, relates to an automobile-person interaction system, relates to an automobile comprising the automobile-person interaction system and further relates to a system comprising the automobile and a portable electronic key.

### BACKGROUND OF THE INVENTION

An electronic key for an automobile may be used for access to the automobile and also to enable starting of the automobile's engine. The electronic key system may rely on radio frequency communication between the electronic key and the car.

Conventionally, there is no method for the automobile to check that the person carrying the key is the legitimate user of the key. Current systems only assume that is the case.

Current electronic key systems may rely on a complex installation and architecture of antennas, such as low frequency (LF) antennas, within the automobile body, to detect where the electronic car key is located. In order to implement safety and comfort functions, the key needs to be located precisely. For example, the engine start button may only work if the key is in or near the driver's seat. Location of the key outside the automobile can be used to selectively open doors and/or trunk, based on the key location.

Conventionally, the car manufacturers install and place multiple (up to twelve or more) low frequency antennas inside the automobile body and operate them with integrated circuits. The number of required antennas (plus cables and connectors) represents a substantial investment for the material and for engineering time to properly set it up and configure it and maintain it. Thus, conventional systems are very complex and cost-intensive.

Thus, there may be a need for a method for automobile-person interaction and for an automobile-person interaction system as well as for an automobile and a system, wherein at least some of the aforementioned problems are reduced. In particular, there may be a need for a method for automobile-person interaction and for an automobile-person interaction system, wherein the system may be 1) made more secure and comfortable with the use of image recognition and 2) simplified, the complexity and expense is reduced in particular requiring a smaller number of communication antennas.

The need may be satisfied by the subject-matter of the independent claims. The dependent claims specify particular embodiments of the present invention.

### OBJECT AND SUMMARY OF THE INVENTION

According to an embodiment of the present invention a method is provided for automobile-person interaction, comprising: authenticating a portable electronic key (such as a transponder) by communication with an automobile wireless communication device; triggering the capture of image data using a camera system of the automobile; analyzing the image data; and performing an action depending on the analyzed image data and possibly the identity of the key-carrying person. These events may be repeated multiple times in the interaction between key and automobile.

The method may further comprise determining, within which region (e.g. of at least one predetermined region, outside or inside of the automobile) a person presumably carrying the electronic key is located, in particular with probability higher than a threshold, based on a result of analyzing the image data; and performing an action depending on the determined region and possibly the identity of the key-carrying person.

The method may be performed by an automobile-person interaction system according to an embodiment of the present invention. The portable electronic key may be configured for performing reception and transmission of electromagnetic radiation, in particular radio frequency (RF) radiation. The electronic key may take multiple forms, including a conventional key fob, as part of a cell phone, smart watch, electronic sleeve, etc.

The automobile wireless communication device (such as a transceiver) may also be configured to receive and transmit electromagnetic radiation, in particular radio frequency radiation. The automobile wireless communication device may for example be configured to transmit signals at particular intensities such that the range within which the signals are detectable by the portable electronic key is limited, for example, limited to a pre-determined region within 5 to 15 m around a center of the automobile.

Conventionally, authentication is the successful exchange of secret credentials known only to the car and its assigned electronic key. This authentication is performed once the key is within the pre-determined region.

After the portable electronic key is authenticated, thereby ensuring that the portable electronic key is authorized to control or trigger automobile operations, capturing the image data may be started.

Before the authentication of the portable electronic key no image data may be captured.

The camera system may comprise one or more cameras (e.g. one, two, three, four or even more, in particular less than three, in particular exactly one) installed at different locations outside or inside the automobile for outside and/or inside surveying. The image data may be analyzed using image processing software for example running on a processor of the automobile or in the cloud. The image data may comprise one or more two-dimensional or three-dimensional images, for example still images or video data. Either one or more of the still images may be analyzed and/or the video data may be analyzed. It may for example be determined that a person approaches or is within a region of one or more predetermined regions. The predetermined regions may for example comprise one or more regions outside and/or inside the automobile. To determine that a person is approaching or is within the automobile or a particular region, for example face detection may be applied. The one or more predetermined regions to be surveyed may have previously been configured. The predetermined regions may for example comprise at least one region for every door of the automobile and at least one region for example for a trunk and/or engine hood of the automobile and/or one region limited to within 5 to 15 m around the center of the automobile.

For determining within which region the person is located, the image data may be exclusively utilized according to one embodiment of the present invention without utilizing any communication between the electronic key and the automobile wireless communication device. According to other embodiments of the present invention, additionally, for determining that the legitimate user of the key is within the predetermined region, the image data may be exclusively utilized according to one embodiment of the present invention without utilizing any communication between the electronic key and the automobile wireless communication device.

For every one of the at least one predetermined region, a probability may be calculated with which the person is located in the respective region. In a situation, where it cannot be determined in which of the multiple predetermined regions the person is actually located, the method may terminate and may not perform any action due to the lack of detected persons in predetermined regions. In such a situation, it may be configured that only the driver door is opened initially. The driver may then open the other doors as needed.

The method may not require more than one radio frequency antenna of the automobile wireless communication device for the communication with the portable electronic key. Thereby, the complexity of the system may be reduced also lowering the costs.

The method may utilize conventionally installed cameras or may utilize additionally installed and provided cameras. Nowadays, image processing is advanced such that person recognition/identification or face detection/recognition is possible. Thus, the method may be implemented in a simple manner.

According to an embodiment of the present invention, the automobile wireless communication device communicates with the portable electronic key using a single antenna or plural antennas, in particular two or three or four or even more antennas (installed at the automobile) for receiving wireless communication signal, e.g. in the VLF and/or LF and/or UHF frequency range of electromagnetic radiation. A single antenna might be one possible implementation. Another implementation may use two antennas: one LF antenna and one RF antenna. The electronic key may receive LF signals and send RF signals, the transceiver in the car may send LF signals and receive RF signals. The single antenna or the plural antennas may detect a radio frequency signal(s) which may be received from any direction for initial localization and authentication. The additional antennas in conventional systems may be replaced by the image processing available through conventional cameras. Thereby, the number of required antennas can be reduced.

According to an embodiment of the present invention, during the method the portable electronic key is within a predetermined distance from the single antenna. The predetermined distance may for example be 10 m to 15 m. Only when the electronic key is within the predetermined distance from the single antenna, capturing the image data may be started. The capturing may continue until the electronic key is outside the predetermined distance. Thus, energy consumption to operate the camera system may be avoided when the key is outside the predetermined region.

According to an embodiment of the present invention, the camera system may comprise an outside camera system, wherein performing the action comprises preparing at least one door within or close to the determined region to unlock, wherein the door is in particular configured to unlock, if the person pulls the door handle, wherein an outside field of view of the outside camera system is 360°.

The door may be a door for entering the front or the back of the car and the door may be arranged on the left side or the right side of the car. The door may also be a trunk door or in general a door at the back face of the car. The door may also be configured as an engine hood or a front lid or fuel lid. Only the one door which is within or close to the predetermined region may be prepared to unlock, while the other doors may not be prepared to unlock. Without being prepared to unlock in general, the doors may not unlock, even if the person pulls the respective door handle. For detecting which door the person is expected to try to open, the radio frequency communication between the portable electronic key and the automobile wireless communication device may not be required any more, since the determination of which door is expected to be opened by the person may be determined solely by the camera system capturing the image data. Thus, the number of radio frequency antennas may be reduced, thereby simplifying the automobile and also simplifying the method.

The outside field of an approximately spherical view may be 360° of a horizontal turn around the car. There may be for example one camera installed at the car covering a front region, one camera installed covering a right-hand side region, one camera installed covering the back region and one camera installed covering the left-hand side region of the car. In other embodiments, only one camera may be required which may be turned or rotated to also essentially cover a field of view of essentially 360° around the car. Thereby, conventionally installed cameras may be utilized exclusively or in combination with additional cameras.

According to an embodiment of the present invention, the camera system comprises an inside camera system, wherein the determined region may comprise a seating region, for example of a driver's seat, wherein performing the action comprises: enabling the automobile locomotion engine to be started by the person, wherein the automobile locomotion engine is configured to start, when additionally a start button is pressed, wherein an inside field of view of the inside camera system includes, for example, the driver's seating region. The inside camera may turn on when the authorized person enters the pre-determined region and may stay on until the authorized person leaves the pre-determined region.

Also, the inside camera system may comprise conventionally installed camera(s) such as ones which are installed for example for fatigue detection or hands-on-steering-wheel monitoring or the like. When the person is not determined to be within the seating region of the driver's seat, starting of the automobile locomotion engine may be disabled. In this case, even if the person would press a start button, the automobile locomotion engine would not start. Conventionally, also the determination that the person is sitting in the driver's seat may have been determined using multiple low frequency or radio frequency antennas and processing respective signal intensities for determining the location of the electronic key (and thus assuming the person) within the car. Also, these multiple inside antennas may be reduced according to this embodiment of the present invention, thereby simplifying the system and the method. Furthermore, in case the electronic key is not carried in the person's pocket the conventional method may erroneously determine the person's location when the determination is based on localizing the electronic key. This potentially erroneous determination of the person's location may be avoided when image data are used.

The driver's seating region may in particular comprise a space region above a driver's seating area and/or a space region in front of a backrest of the driver's seat.

According to an embodiment of the present invention, the determined region is a region around a trunk, wherein performing the action comprises, if it is further determined by analyzing the image data that the person shows a particular gesture: opening the trunk without needing to touch any portion of the automobile and without requiring further communication between the electronic key and the automobile wireless communication device.

In another embodiment, the determined region may comprise a region around a hood of the automobile and the hood may also be opened (without manual action by the person) if it is further determined by analyzing the image data that the person shows another particular gesture. Thus, in particular if the person doesn't have any hand free, nevertheless the trunk or the hood may open automatically. Thereby, the comfort of utilizing the automobile may be improved.

According to embodiments of the present invention additional gestures may be recognized for outside control of automobile operation for example in the pre-determined region within 5 to 15 m around the center of the car, e.g. for 1) lowering/raising windows 2) folding/unfolding mirrors 3) turning on/off headlights 4) initiating/performing emergency procedures (car alarm, call police, record video, record photographs) 5) turning on heater/air conditioner 6) turning on radio 7) adjusting seating, etc.

According to an embodiment of the present invention, analyzing the image data comprises performing face recognition to either recognize a person's identity from a number of known person identities or to determine that the person is none of the known person identities.

The automobile may comprise an electronic storage (or at least access to a storage including cloud storage) in which images or video streams of multiple persons, in particular of multiple faces of multiple persons, may be stored. The images of the stored faces of the persons may be compared to the image data captured by the camera system (inside or outside) and thereby a match may be determined identifying the authorized person. Alternatively, if no match or only a match of low significance is determined, it may be concluded that the person approaching the automobile and being located within the predetermined region is none of the known, authorized person identities. In this case, at least some or all operations which may be effected by an authorized person may be disabled. Thereby, an advantageous controlling of the capabilities of the automobile may be provided in dependence of the person being detected within the region. If an authorized person is not identified by the cameras (for example, because face is covered), there may be an emergency access and engine start functionality for example involving active use of the electronic key. Additionally, face recognition may be used to allow entrance into the automobile.

According to an embodiment of the present invention, performing the action comprises, if the person's identity is recognized: personalizing at least one setting of the automobile, using previously-set data stored in association with the recognized person's identity. Personalizing at least one setting of the automobile may improve the comfort of utilizing the automobile and may in particular support disabled persons. The data stored in association with the recognized person's identity may have been stored in various forms of electronic storage previously. These personal data may also be (or have been) configurable by the person as desired.

According to an embodiment of the present invention, personalizing at least one setting of the automobile comprises: positioning of at least one inside or outside mirror and/or setting of a steering wheel and/or setting of a seat and/or setting of an air conditioning system and/or setting of an inside temperature and/or setting of an entertainment medium and/or setting of an interior lighting. Other settings of the automobile may be adapted after determining the person's identity. These settings may be adjusted individually or in any combination.

According to an embodiment of the present invention, performing the action comprises, if the person is determined to be none of the known person identities: restricting automobile operations which are enabled to be effectuated by the person. In particular, it may be identified that an unauthorized person has gained access to the car. However, since the analysis of the image data resulted in the determination that the person is none of known person identities, the unauthorized person may have selected functionality (for example, car mechanic or valet parking person) or be prohibited from for example stealing the car, accessing personal data or driving the car and so forth. There may be a method to temporarily authorize a person for example a car mechanic or valet parking person. There may be a method to capture images or video of unauthorized person, in the event of theft attempts.

In particular, once the person is within the car and is sitting on the driver's seat, the face recognition may be more accurate, since the person's head is supposed to be in a predetermined region and is facing frontward, which may simplify the image processing compared to the situation where a person is approaching the car from outside.

According to an embodiment of the present invention, the camera system comprises detectors (for example two-dimensional detectors in general sensitive to electromagnetic radiation) which may be sensitive to visible light and/or infrared light and/or radar waves. The detectors may for example comprise CCD detectors, CMOS detectors, photodiodes or the like. The camera system may also comprise according to embodiments of the present invention different types of cameras having different types of detectors sensitive to different wavelength regions of the electromagnetic spectrum. Image data from different types of cameras may be combined according to embodiments of the present invention for determining within which region a person is located, gestures, face detection, identity recognition.

According to an embodiment of the present invention, the communication comprises radio frequency communication for example VLF and/or LF and/or UHF communication, and/or the communication comprises exchange of authentication information and/or secret credentials, to identify the electronic key to be authenticated. Thereby, conventional electronic car access and car use systems may be supported.

It should be understood that features, individually or in any combination, disclosed in context of a method for automobile-person interaction may also be applied, individually or in any combination, to an automobile-person interaction system according to an embodiment of the present invention and vice versa. For example, conventional cameras in automobiles may be used for car access and car use, as part of this invention.

According to an embodiment of the present invention it is provided an automobile-person interaction system, comprising: an automobile wireless communication device configured to communicate with a portable electronic key; a camera system mounted at the automobile and configured to capture image data; a processor being configured: to analyze the image data, and to trigger performing an action depending on the analyzed image data.

Furthermore, a system is provided, comprising: an automobile comprising an automobile-person interaction system according to the preceding embodiment and a portable electronic key configured to communicate with the automobile wireless communication device.

### BRIEF DESCRIPTION OF THE DRAWINGS

The invention will be described in more detail hereinafter with reference to examples of embodiment but to which the invention is not limited.
Figure 1 schematically illustrates a system according to an embodiment of the present invention comprising an automobile according to an embodiment of the present invention and a portable electronic key.
Figure 2 schematically illustrates a flow chart of a method according to an embodiment of the present invention performed by the system of figure 1.

### DESCRIPTION OF EMBODIMENTS

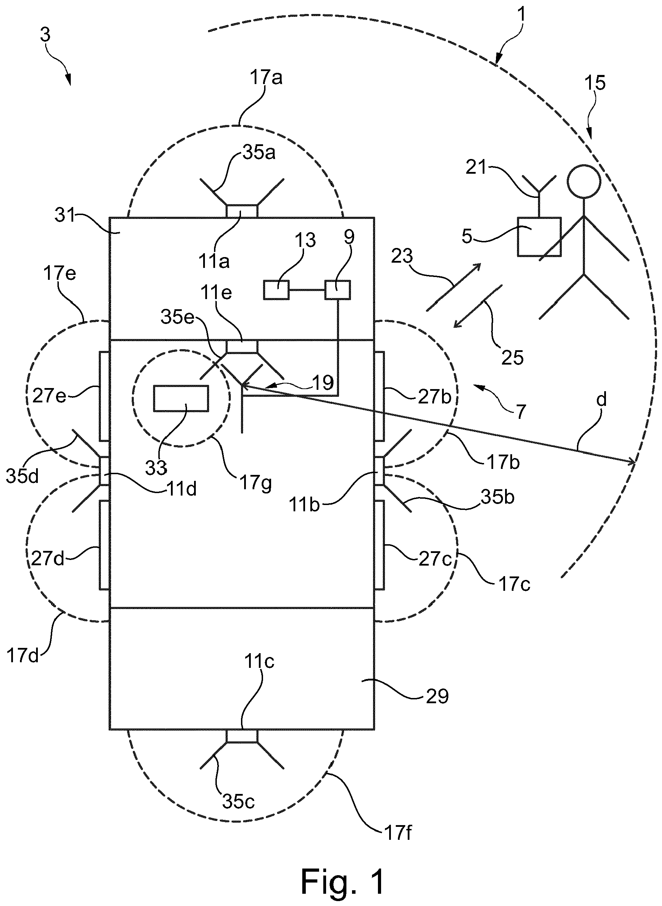

The system 1 schematically illustrated in the figure 1 comprises an automobile 3 according to an embodiment of the present invention and a portable electronic key 5, such as a transponder or fob. The automobile 3 comprises an automobile-person interaction system 7 according to an embodiment of the present invention. Thereby, the automobile-person interaction system 7 comprises an automobile wireless communication device 9 which is configured to communicate with the portable electronic key 5. The automobile-person interaction system 7 further comprises a camera system comprising outside cameras 11a, 11b, 11c, 11d and an inside camera 11e which are mounted at the automobile and which are configured to capture image data. The automobile-person interaction system 7 further comprises a processor 13 which is configured to analyze the image data taken from the cameras 11a, ..., 11e and to determine, based on a result of analyzing the image data, within which region the person 15 carrying the electronic key 5 is located and which is further configured to trigger performing an action depending on the determined region. In the presently illustrated embodiment, the surveyed region comprises a hood region 17a, a right front door region 17b, a right back door region 17c, a left rear door region 17d, a left front door region 17e, a trunk region 17f and a driver's seat region 17g. Welcome lights may be turned on when the person is within distance d.

In the illustrated embodiment, the transceiver (e.g. a device for transmitting and receiving wireless communication signals) 9 utilizes a single antenna 19 to communicate with the electronic key 5 having an antenna 21 using electromagnetic radiation. Thereby, the transceiver 9 transmits a beacon signal 23 which is designed to reach not further than a predetermined distance d around the antenna 19 of the automobile 3. The beacon signal 23 may for example be a low frequency radio signal. The distance d may for example be 10 m. The person 15 carrying the electronic key 5 is within the predetermined region d and thus the electronic key 5 receives the beacon signal 23. The electronic key 5 responds with a response signal 25, for example at an ultrahigh frequency (UHF). In other embodiments, other frequencies may be utilized for the communication between the transceiver 9 and the electronic key 5. Furthermore, some credentials may be exchanged between the transceiver 9 and the electronic key 5 to identify the key/electronic key 5 and ensuring that it is authorized to control automobile functions. Subsequently, the cars welcome lights may be activated.

Upon the successful authentication of the portable electronic key 5, the automobile's outside video cameras 11a, 11b, 11c, 11d are activated, image processing is started to find the person approaching the car. Once the person or the persons are coming closer to the car, the image processing may calculate a certain probability of which doors might be opened, such as when the person 15 is within one of the regions 17a, ..., 17f. In case, the person has reached one of the door regions 17b, 17c, 17d, 17e, the respective door lock is prepared to unlock but is not actually unlocked. Once the door handle of the door within the respective door regions 17b, 17c, 17d, 17e is pulled, the respective door 27b, 27c, 27d or 27e unlocks.

In case the person 15 is behind the trunk 29, thus within the trunk region 17f, and the person shows a certain gesture, for example recognized by the outside camera 11c, the trunk 29 opens. Alternatively, when the person 15 is within the hood region 17a and shows a particular gesture, the hood 31 opens without the person requiring to touch or pull a hood handle.

According to a particular embodiment, the person 15 may approach and may move within the left front door region 17e upon which the driver's door 27e may be prepared to unlock. Once the person 15 pulls the driver's door handle, the driver's door 27e opens.

The person may then take a seat on the driver's seat 33. After having opened the driver's door 27e, the inside camera 11e may be started to capture image data including a driver's seat region 17g. Furthermore, image processing is performed on the captured image data to determine whether the person is in the driver's seat region 17g and the driver's seat 33 is occupied. Thereupon, it may be enabled that the automobile locomotion engine is getting started by the person. Thus, in the case the person is determined to occupy the driver's seat, engine start may be possible.

The analyzing the image data may further apply face recognition to identify the person sitting on the driver's seat 33. Once a person is recognized, custom configuration for the driver may be applied, for example: position of the mirror, steering wheel, seat, temperature, radio station, interior lighting.

If it is determined that the driver's seat 33 is occupied with an unknown person, a valet parking mode may be applied with very limited car capabilities (for example limited engine power, maximum speed, no media player, etc.).

To each of the cameras 11a, ..., 11e, a respective field of view 35a, ..., 35e is associated defining the angle or area from which image data are acquired. The combination of the fields of view 35a, ..., 35e cover all predetermined regions 17a,..., 17g.

According to an embodiment of the present invention, the car existing driver assist or autonomous driving equipment (for example video cameras and image recognition capabilities) are used, according to embodiments of the present invention, to detect the driver's location (inside/outside, left/right door, trunk, driver's seat). The detected location may then be used to enable or disable particular automobile functions. Embodiments of the present invention may utilize passive keyless entry, passive keyless go, PKE, car access methodologies.

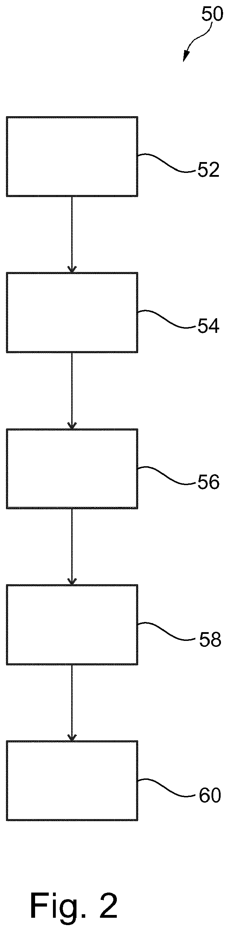

The figure 2 schematically illustrates a flow chart of a method 50 according to an embodiment of the present invention for automobile-person interaction performed by the system of figure. 1. In method step 52 authenticating a portable electronic key 5by communication with an automobile wireless communication device 9 is performed. In method step 54 capturing image data using a camera system 11a, ..., 11e of the automobile is performed. In method step 56 analyzing the image data is performed. In method step 58 determining, within which region 17a, ..., 17g a person 15 carrying the electronic key 5 is located, in particular with probability higher than a threshold, based on a result of analyzing the image data is performed. In method step 60 performing an action depending on the determined region 17a, ..., 17g is performed.

## Claims

1. A method for automobile-person interaction, comprising:
authenticating a portable electronic key (5) by communication with an automobile wireless communication device (9) which triggers capturing image data using a camera system (11a, ..., 11e) of the automobile;
analyzing the image data; and
performing an action depending on the analyzed image data.

2. The method according to the preceding claim, further comprising:
determining, within which region (17a, ..., 17g) a person (15) presumably carrying the electronic key (5) is located, in particular with probability higher than a threshold, based on a result of analyzing the image data; and
performing the action depending on the determined region (17a, ..., 17g).

3. The method according to the preceding claim, wherein the automobile wireless communication device (9) communicates with the portable electronic key (5) using a single antenna or plural antennas, in particular two or three or four or even more antennas (19),
wherein capturing image data is started when the portable electronic key (5) is within a predetermined distance (d) from the single antenna (19) or the plural antennas and when the portable electronic key (5) has been authenticated.

4. The method according to one of the preceding claims, wherein the camera system comprises an outside camera system (11a, ..., 11d), wherein performing the action comprises:
preparing at least one door (27b, 27c, 27d, 27e) within or close to the determined region (17b, 17c, 17d, 17e) to unlock,
wherein the door (27b, 27c, 27d, 27e) is in particular configured to unlock, if the person pulls the door handle,
wherein an outside field of view (35a,..., 35d) of the outside camera system is essentially 360° of a horizontal turn, the outside camera system in particular comprising a single camera or plural cameras (11a, ..., 11d) at least one having a fixed field of view or variable field of view.

5. The method according to one of the preceding claims, wherein the camera system comprises an inside camera system (11e), wherein the determined region comprises a seating region (17g) of a driver's seat (33), wherein performing the action comprises:
enabling the automobile locomotion engine to be started by the person,
wherein the automobile locomotion engine is configured to start, when additionally a start button is pressed,
wherein an inside field of view (35e) of the inside camera system includes the driver's seating region.

6. The method according to one of the preceding claims,
wherein performing the action comprises, if it is further determined by analyzing the image data that the person shows a particular gesture and if the person is within the determined region:
performing an action specific for the determined region and specific for the recognized gesture without needing to touch any portion of the automobile and without requiring further communication between the electronic key (5) and the automobile wireless communication device (9),
wherein in particular the determined region is a trunk region around a trunk (17f) or a trunk area in the front of the automobile and performing the action comprises opening a hood or a cover in the trunk region.

7. The method according to one of the preceding claims, wherein analyzing the image data comprises:
performing face recognition,
to either recognize a person's identity from a plurality of known person identities or
to determine that the person is none of the known person identities.

8. The method according to the preceding claim,
wherein performing the action comprises, if the person's identity is recognized:
personalizing at least one setting of the automobile, dependent of set data stored in association with the recognized person's identity.

9. The method according to the preceding claim,
wherein personalizing at least one setting of the automobile comprises:
positioning of at least one inside or outside mirror and/or setting of a steering wheel and/or setting of a seat and/or setting of an air conditioning system and/or setting of an inside temperature and/or setting of an entertainment medium and/or setting of an interior lighting.

10. The method according to one of the preceding claims 7 to 9,
wherein performing the action comprises, if the person is determined to be none of the known person identities:
restricting automobile operations which are enabled to be effectuated by the person.

11. The method according to the preceding claim, wherein restricting the automobile operations comprises:
setting maximum automobile locomotion engine power and/or speed and/or disabling at least one function of an entertainment system and/or disabling the automobile locomotion engine to be started by the person.

12. The method according to one of the preceding claims,
wherein, if the person is within the predetermined distance (d) but outside of any of predetermined survey regions (17a - 17g) and if it is further determined by analyzing the image data that the person shows a particular gesture of at least one predetermined gesture, performing the action comprises, without the person needing to touch any portion of the automobile and without requiring further communication between the electronic key (5) and the automobile wireless communication device (9), at least one of:
lowering/raising at least one window of the automobile;
folding/unfolding at least one mirror of the automobile;
turning on/off headlights;
initiating/performing at least one emergency procedure, in particular car alarm, call police, record video, record photographs;
turning on heater/air conditioner;
turning on radio;
adjusting seating.

13. The method according to one of the preceding claims,
wherein the communication comprises wireless communication, in particular using VLF and/or LF and/or HF and/or UHF frequency range of electromagnetic radiation, and/or
wherein the communication comprises exchange of authentication information (23, 25) and/or secret credentials, to identify the electronic key to be authenticated.

14. An automobile-person interaction system (7), comprising:
an automobile wireless communication device (9) configured to communicate with a portable electronic key (5);
a camera system (11a, ..., 11e) mounted at the automobile (3) and configured to capture image data;
a processor (9) being configured:
to analyze the image data,
to trigger performing an action depending on the analyzed image data,
in particular to determine, based on a result of analyzing the image data, within which region (17a, ..., 17g) a person (15) presumably carrying the electronic key (5) is located.

15. System (1), comprising:
an automobile (3) comprising an automobile-person interaction system (7) according to the preceding claim; and
a portable electronic key (5) configured to communicate with the automobile wireless communication device (9).
